Europäisches Patentamt

European Patent Office

Office européen des brevets

(11) Publication number: **0 025 817**
**B1**

(12) **EUROPEAN PATENT SPECIFICATION**

(45) Date of publication of patent specification: **03.10.84**　　(51) Int. Cl.³: **C 01 F 7/02**

(21) Application number: **80102593.3**

(22) Date of filing: **09.05.80**

(54) **A method for forming stable dispersions of alumina in water and the so-obtained dispersions.**

(30) Priority: **04.09.79 US 72265**

(43) Date of publication of application:
**01.04.81 Bulletin 81/13**

(45) Publication of the grant of the patent:
**03.10.84 Bulletin 84/40**

(84) Designated Contracting States:
**BE DE FR GB NL**

(56) References cited:
**DE-A-2 542 609**
**US-A-3 357 791**
**US-A-3 385 663**
**US-A-4 117 105**
**US-A-4 186 178**
**US-A-4 191 737**

(73) Proprietor: **CONOCO INC.**
**1000 South Pine Street P.O. Box 1267**
**Ponca City Oklahoma 74601 (US)**

(72) Inventor: **Oberlander, Richard Kent**
**2, Rockview Road**
**Ponca City, OK 74601 (US)**
Inventor: **Decker Jr., Lewis Bernard**
**Rt 5 Box 731**
**Lake Charles, LA 70601 (US)**

(74) Representative: **Patentanwälte Dipl.-Ing. A. Grünecker, Dr.-Ing. H. Kinkeldey, Dr.-Ing. W. Stockmair,**
**Dr. rer. nat. K. Schumann, Dipl.-Ing. P.H. Jakob, Dr. rer. nat. G. Bezold Maximilianstrasse 58**
**D-8000 München 22 (DE)**

Courier Press, Leamington Spa, England.

**0 025 817**

**Description**

This invention relates to a method for stabilizing alumina slurries against viscosity increases. More particularly, this invention relates to a method for increasing the life of alumina slurries by heat treating alumina under pressure in the presence of water, then forming alumina slurries using the recovered alumina and normal peptizing agents.

Aluminas are utilized commercially by placing such aluminas into dispersions or suspensions (called slurries in the art) through the use of peptizing agents such as an acid. Examples of such acids are hydrochloric acid and nitric acid. Once in a suspension or slurry state, these aluminas are commercially used and widely varying applications such as frictionizing paper surfaces, fiberglass surfaces, and metal surfaces. Alumina is also used as an antistatic and soil protection agent on wool, nylon, and acrylic carpets. Alumina is used as a dispersion agent in rug shampoos as well as an antistatic or anti-soil agent. Alumina also finds use as binders for vacuum cast alumina silica fibers, as a sintering aid, and for coating ceramic monoliths for use in auto exhaust catalysts. Usually, such aluminas are alpha alumina monohydrate (boehmite) which tend to form more stable colloidal aqueous dispersions with dilute peptizing agents such as acids than do other aluminas such as alpha alumina trihydrates. However, unless stabilized in some fashion, all alumina slurries tend to very rapidly from thick gelatinous materials (or gels) and thus become unusable for their commercial applications. It is of great importance to maintain the viscosity lifetime of a prepared alumina slurry at the desired level for as long as possible. Factors effecting the useful lifetime of these slurries are acid concentration, type of acid employed, and type of alumina employed.

It has been found that as the alumina concentration increases, the tendency of the dispersion to gel is also increased. An insufficient amount of peptizing agent will lead to only partial dispersion of the alumina. Increasing the amount of peptizing agent will increase the amount of alumina dispersed such that with an optimum amount of acid nearly all of the alumina will be dispersed and the maximum fluid dispersion life will be obtained before gelling occurs. If the amount of peptizing agent is increased above the optimum point, the fluid life of the dispersion decreases and gelling is accelerated.

The type of peptizing agent also have an effect upon stabilization life. Peptizing agents used are normally monovalent acid such as nitric, hydrochloric, formic, acetic and so forth. Divalent and trivalent acids lead to non-dispersing flocculants. Generally, dispersions made using the monovalent organic acids have longer fluid life than nitric and hydrochloric acid aluminas. However, the reverse has been found to be true with some boehmite type aluminas wherein non-organic acids produce longer dispersion life.

In addition, small amounts of salts in the dispersion are reported to increase the thickness of boehmite alumina dispersions significantly, as set forth in *Baymal*® *Colloidal Alumina,* section 2 "Physical and Chemical Behavior" DuPont Chemical Company product brochure. Addition of colloidal silica is reported to reduce the thickening of colloidal aluminas in *Alumina as a Ceramic Material* American Chemical Society, 1970, Gitzan page 113.

In U.S. patent 4 191 737 of the applicant alumina slurries or suspensions were taught to be stabilized against viscosity increases by treating with water which had been heated to temperature of from about 40°C to about 100°C, then cooling, decanting the water and recovering a wet cake. Water was then added to the recovered wet cake alumina to obtain a slurry with desired alumina content and $CO_2$ was sparged through the finished slurry.

In corresponding U.S. patent 4 179 940 alumina slurries were taught to be stabilized against thickening and gelling by digesting the dried alumina powder in hot water for a time sufficient to stabilize the alumina. The digested alumina was recovered and dispersed in water containing a small amount of peptizing agents.

In U.S. patent 4 117 105, a method for forming suspensions of alumina in water is known. This method comprises heating alpha alumina monhydrate in a sealed autoclave to temperatures of 140—200°C in the presence of water and allowing the autoclave to achieve autogenous pressure for a period of one half to six hours, drying said alumina and mixing it with dilute aqueous acid solutions. The obtained alpha alumina monohydrate is dried by conventional methods of drying such as spray drying, tray drying or rotary drying.

Many of these prior art inventions were useful where alumina slurries are utilized and only a portion of the alumina needed to be truly dispersed, while the balance could be kept mechanically suspended by agitation. All the prior art methods incur one or more undesirable limitations. For example, the treatment processes result in a wet cake which is difficult to handle. In addition, considerable amounts of water are required in the treatment process, and if carbon dioxide is used, considerable amounts of carbon dioxide are likewise necessary. The treated alumina from the prior art processes may require filtering and/or washing before being used in the preparation of the dispersion. In addition, continuous stirring may be required to keep all the alumina suspended since only a portion may be truly dispersed. Continual bubbling of $CO_2$ through the dispersion or slurry may also be needed. The instant invention, in contrast, provides a method wherein in the alumina is truly dispersed and no mechanical agitation is required to keep the alumina suspended. In addition, even longer fluid life is obtained than provided by those processes of the prior art.

2

Thus it would be of great benefit to provide a method for obtaining a true alumina dispersion having a long suspension life before gelling.

It is therefore an object of the present invention to provide a method for making a true alumina dispersion which has a long fluid life. Other objects will become apparent to those skilled in this art as the description proceeds.

It has been discovered in accordance with the instant invention that gel-resistant suspensions of alumina in water can be obtained by heating alpha alumina monohydrate in a sealed autoclave to temperatures of from 121° to 371°C in the presence of from 10—18% water based upon the weight of total alumina present and allowing the autoclave to achieve autogenous pressure for a time ranging from 5 minutes to 24 hours, drying said alumina and mixing it with dilute aqueous acid solutions, wherein the drying of said alumina is performed by venting said autoclave at a temperature of about 107°C and recovering said dry alumina. The alumina must be free of sulfate and/or other impurities which cause flocculation and precipitation in water dispersions. The present invention affects aluminas itself and not contaminants.

In carrying out the process of the instant invention, the time of heating can range from 5 minutes to 24 hours, although from 1 hour to 8 hours is preferred. The aluminas tested herein are derived from the hydrolysis of aluminum alkoxide, although aluminas from other sources can be used if sulfates and other flocculating contaminates are not contained in the alumina. The preferred method of carrying out the process of the instant invention is to heat the aluminas at temperatures of from 149°C to 260°C in the presence of from 10 to 30 weight percent water. As this heating in the presence of water is done in the sealed autoclave, an autogenous pressure will result. Such a pressure is normally quite sufficient for the stabilization of the aluminas described herein. However, extra outside pressure can be added as desired. Normally, however, such pressure is not necessary.

Once recovered from the autoclave, alumina is dispersed in an aqueous acid solution containing from 0.4 to 2.0% monovalent acid. These acids can be those well known in the art as represented by nitric, hydrochloric, acetic, formic, and in general, monovalent acids.

The aluminas obtained from the process of the instant invention maintain true dispersions for great lengths of time. The physical details of the structure alteration in the alumina are not known; however, behavior in dispersions is greatly improved, producing dispersion of vastly increased stabilizer. As compared to the state of the art cited above, according to the present invention, the drying of the alpha alumina monohydrate is performed by simply relieving the pressure of the autoclave.

The suspension obtained according to the invention is stable, does not gel and does not settle retaining the high degree of alumina in suspension. In addition, the present invention does not require colloid milling in order to make such a dispersion.

The instant invention is more concretely described with reference to the examples below wherein all parts and percentages are by weight unless otherwise specified.

Several experiments were carried out showing the effect of autoclaving time, autoclaving temperature and water content upon the process of the instant invention. These experiments were generated using from 1000 to 1500 grams of alumina (CATAPAL 'SB', trademark of and sold by Conoco Inc.) which was placed in a 3.8 liter autoclave. Distilled water was then added to the autoclave, the amount of water normally being equivalent to about 10 weight percent of the alumina. The autoclave was sealed and brought to treatment temperature. The rate of the temperature rise was about 6°C per minute. At the desired autoclaving temperature, certain periods of time were tested. At the end of the autoclaving period, the autoclave was allowed to cool to 107°C. At 107°C the autoclave was vented to allow the steam to escape to prevent the alumina from picking up moisture and becoming a wet cake. After cooling to room temperature, the alumina was removed from the autoclave as a dry, flowable powder.

The dispersions tested in the following examples were prepared by first measuring the autoclave alumina for water content. Normally the water content was from 22.5 to 25 weight percent (typical for CAPATAL 'SB' alumina as manufactured). If the water content was outside the range, the formula concentration was adjusted so that all dispersions would be made on the same basis (each dispersion made at a given concentration would contain the same amount of $Al_2O_3$). A dispersing solution having the desired acid concentration was measured by volume and the alumina was poured into the acid solution. During this addition, the alumina was continuously stirred with a low shear mixer. Mixing was continued for 24 hours after alumina was added to the solution. Viscosity and pH were measured at the end of the mixing period. All dispersions were checked visually every day to see if such dispersions were still fluid. At the end of 30 days the amount of alumina actually dispersed was determined by decanting the dispersion from the sediment of the alumina which had settled to the bottom of the container. This determination could not be made for dispersions that had gelled.

Example 1 shows the effect of autoclaving time upon the process of the instant invention.

Example 1

Samples of boehmite alumina (CATAPAL 'SB') were autoclaved at 121°C for varying periods of time. The autoclave charge consisted of alumina and distilled water equal to 10% of the weight of

3

alumina. After autoclaving, the alumina was dispersed at a 42% concentration level in 1.4 weight percent nitric acid solution. Table 1 contains a summary of the test results.

TABLE 1

| Autoclave time (hrs.) | 0 | 2 | 6 | 24 |
|---|---|---|---|---|
| Dispersion Data: 1 hr. | | | | |
| pH | — | 4.0 | 4.1 | 3.0 |
| viscosity (cps) | gel | 1102 | 1060 | 55 |
| 3 hrs. | | | | |
| pH | — | — | 4.2 | 3.5 |
| viscosity (cps) | — | gel | 8200 | 120 |

Viscosity measurements were made using a Brookfield viscometer. The data indicates that at constant temperature the increasing autoclave time increases dispersion stability.

The effect of the amount of water used was tested in Example 2.

Example 2

Examples of CATAPAL were autoclaved as described in Example 1 except the ratio of water to alumina was varied. Test dispersions were made from the autoclave treated alumina. Test results showed that increasing the amount of water improved the dispersion stability of the alumina. However, the treated alumina resulting from higher water contents (about 30% water) appears lumpy or clay-like. This consistency made subsequent handling of the treated alumina more difficult although stable dispersions resulted.

TABLE 2

| Water (as wt% of alumina) | 10 | 20 | 40 | 80 |
|---|---|---|---|---|
| Dispersion Data: 1 hr. | | | | |
| pH | 4.0 | 3.8 | 3.9 | 3.9 |
| viscosity (cps) | 1102 | 800 | 20 | 25 |
| 3 hr. | | | | |
| pH | — | 3.8 | 4.1 | 4.0 |
| viscosity (cps) | gel | 2200 | 25 | 25 |

The effect of autoclaving temperature was set forth in Example 3.

Example 3

Experimental runs were carried out as set forth in the previous examples except that all runs were made for 3 hours and the temperature was varied over the range of 250 to 260°C using 10 weight percent water. Test dispersions of the treated alumina were dispersed in acid solution. Results of the test are set forth in Table 3.

TABLE 3

| Temperature of run (°C) | 121 | 149 | 177 | 204 | 232 | 260 |
|---|---|---|---|---|---|---|
| Dispersion Data: 1 hr. | | | | | | |
| pH | 4.0 | 3.0 | 2.1 | 1.7 | 1.5 | 1.3 |
| viscosity (cps) | 180 | 78 | 65 | 168 | gel | gel |
| 3 hrs. | | | | | | |
| pH | 4.1 | 3.1 | 2.1 | 1.7[1] | | |
| viscosity (cps) | 532 | 212 | 65 | 3140 | | |

The data of Example 3 shows that increasing autoclave temperature improves dispersion stability up to a point. However, once that point is reached, it appears that dispersion ability is detrimentally effected. All dispersions carried out have shown that there is an optimum acid level which will result in nearly all alumina being dispersed and remaining dispersed for some period of time. At the concentration levels tested (42 weight percent alumina) it has been found that when the acid level is below the optimum, less alumina will be dispersed (more will settle out). If the acid level is increased above optimum, fluid life of the dispersion decreases.

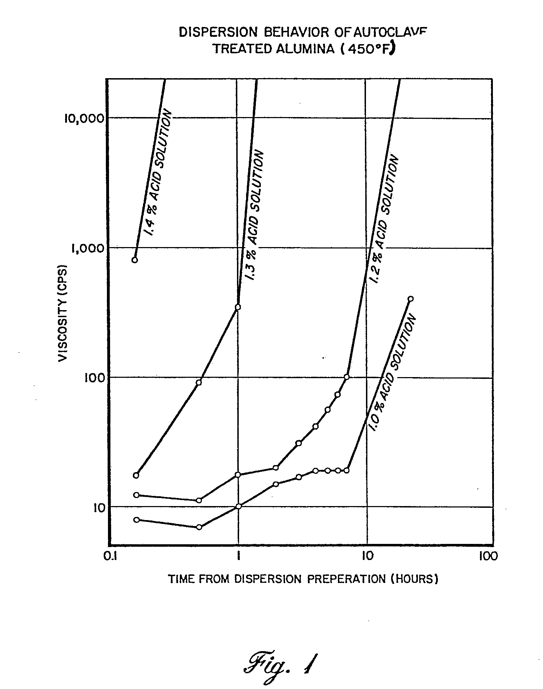

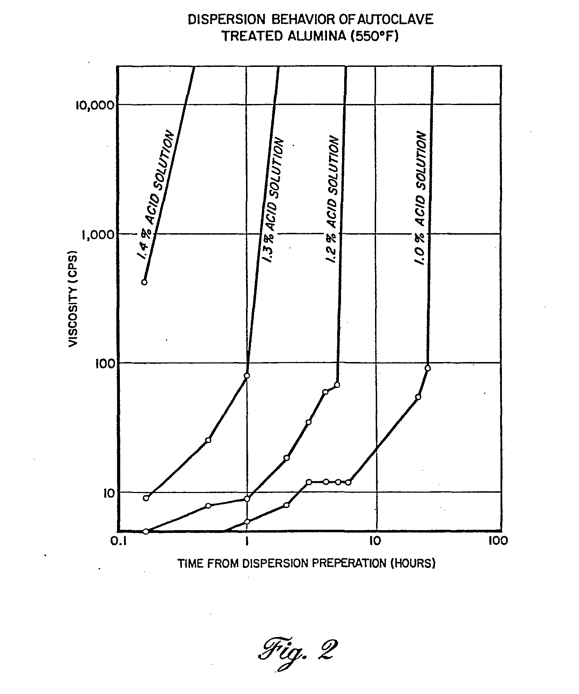

Samples of the aluminas autoclaved at 232 and 260°C were dispersed in acid solutions of various concentrations. In all dispersions tested, the amount of non-dispersed alumina was very small (about 5% of the alumina) but was noted to be getting larger at the lowest acid concentration tested. Results of these dispersions are shown in Figures 1 and 2, which plot viscosity vs log time for aluminas autoclaved at 232 and 260°C respectively.

It was observed that alumina autoclaved in the above experiments did not appear to be receiving uniform heat treatment. This was observed since alumina samples from the same autoclave experiment have different dispersion behaviors unless the alumina was uniformly blended before dispersion testing.

Cause of this non-uniformity is believed to be due to poor heat transfer of alumina powder, allowing some alumina to receive more heat treatment than alumina at other positions of the autoclave. Therefore, a new agitator was designed so that the power would receive more mixing action during autoclaving. After installation of the agitator, all material received more consistent heat treatment.

Example 4

After the improved agitation, a new set of autoclave runs in dispersions were initiated. Autoclave temperatures of 121 and 149°C and dispersion concentrations of 10 to 30 weight percent alumina were tested. Tests were carried out as described in Example 1. Samples were collected and tested every 7 days.

These tests showed that for given acid concentrations, the amount of alumina that will disperse is enhanced by increasing autoclave treatment temperatures. The data also showed the fluid life of the dispersions is greatly improved by autoclave treatment, particularly for higher alumina concentrations (30% and higher). Finally, the data showed the dispersions made from autoclave treated alumina which gelled were thixotropic; that is, with the application of shear, they again became fluid. This is in distinct contrast to typical boehmite aluminas which have formed gels which remain in such a state even with agitation. The results of these experiments showing non-autoclaved alumina autoclaved for 3 hours at 121°C and alumina autoclaved 3 hours at 149°C are shown in Tables 4, 5, and 6, respectively.

TABLE 4
Not Autoclaved

| Alumina treatment | Nitric acid concen- tration | Percent of alumina dispersed | Concen- tration of final dispersion (%) | Viscosity after 30 days (cps) |
|---|---|---|---|---|
| A. 10% Alumina in Acid Solution Mixture | 0.2 | 60 | 6.0 | |
| | 0.4 | 93 | 9.3 | |
| | 0.6 | 98 | 9.8 | — |
| | 0.8 | 96 | 9.6 | 520 |
| B. 15% Alumina in Acid Solution Mixture | 0.2 | 23 | 3.5 | — |
| | 0.4 | 82 | 12.4 | — |
| | 0.6 | 93 | 13.9 | — |
| | 0.8 | 96 | 14.5 | — |
| C. 20% Alumina in Acid Solution Mixture | 0.2 | 16 | 3.2 | — |
| | 0.4 | 42 | 8.4 | — |
| | 0.6 | 85 | 19.0 | 10,000 |
| | 0.8 | 93 | 18.6 | — |
| | 1.0 | 93 | 18.7 | 410 |
| D. 30% Alumina in Acid Solution Mixture | 0.6 | (5) | — | gel |
| | 0.8 | (5) | — | gel |
| | 1.0 | (5) | — | gel |
| | 1.2 | (5) | — | gel |
| | 1.4 | (5) | — | gel |

TABLE 5

|  |  | Autoclaved 3 hours at 121°C | | |
| Alumina treatment | Nitric acid concentration (wt%) | Percent of alumina dispersed | Concentration of final dispersion (%) | Viscosity after 30 days (cps) |
| --- | --- | --- | --- | --- |
| A. 10% Alumina in Acid Solution Mixture | 0.2 | 73.7 | 7.3 | — |
|  | 0.4 | 98 | 9.8 | — |
|  | 0.6 | 98 | 9.8 | — |
|  | 0.8 |  |  |  |
| B. 15% Alumina in Acid Solution Mixture | 0.2 | 89 | 13.4 | — |
|  | 0.4 | 97 | 14.6 | — |
|  | 0.6 | 98 | 14.6 | 75 |
|  | 0.8 |  |  |  |
| C. 20% Alumina in Acid Solution Mixture | 0.2 | 66 | 13.2 | — |
|  | 0.4 | 95 | 18.9 | — |
|  | 0.6 | 98 | 19.6 | — |
|  | 0.8 | 100 | 20 | >10,000* |
| D. 30% Alumina in Acid Solution Mixture | 0.6 | 72 | 21.6 | 930 |
|  | 0.8 | 93 | 27.9 | 250 |
|  | 1.0 |  |  | 10,000+* |
|  | 1.2 |  |  | gel (<1 day)* |
|  | 1.4 |  |  |  |

*Thixotropic

7

TABLE 6

|  | Nitric acid concen- tration (wt%) | Autoclaved 3 hours at 149°C | | |
| --- | --- | --- | --- | --- |
| Alumina treatment | | Percent of alumina dispersed | Concen- tration of final dispersion (%) | Viscosity after 30 days (cps) |
| A. 10% Alumina in Acid Solution Mixture | 0.2 | 89 | 8.9 | — |
|  | 0.4 | 99 | 9.9 | — |
|  | 0.6 | 97 | 9.7 | — |
|  | 0.8 |  |  |  |
| B. 15% Alumina in Acid Solution Mixture | 0.2 | 96 | 14.4 | — |
|  | 0.4 | 99 | 14.9 | — |
|  | 0.6 | 99 | 14.9 | 60 |
| C. 20% Alumina in Acid Solution Mixture | 0.2 |  |  |  |
|  | 0.4 | 89 | 17.7 | — |
|  | 0.6 | 97 | 19.4 | — |
|  | 0.8 | 99 | 19.9 | 375* |
|  | 1.0 | 100 | 20.0 | 10,000+* |
| D. 30% Alumina in Acid Solution Mixture | 0.6 |  |  |  |
|  | 0.8 | 93 | 28 | — |
|  | 1.0 | 98 | 29.5 | 10,000+* |
|  | 1.2 |  |  | gel (2 days)* |
|  | 1.4 | — | — | gel (1 1/2 hrs)* |

*Thixotropic

In these tables percent of alumina dispersed is that alumina in the dispersion which did not settle out. Concentration of final dispersion is that alumina in the final dispersion after setting unstirred for 30 days. A dash in the viscosity column indicates that the viscosity was below measurable limit, that is, water thin. In Table 4 some samples gelled in less than 1 day when 30% alumina was used and the amount of alumina dispersed could not be determined. In Tables 5 and 6, those numbers marked with an asterisk indicate thixotropic dispersions.

Thus the instant invention provides a vastly improved method for stabilizing alumina dispersions for greatly increased lengths of time while allowing the alumina to be easily handled, constant attention is not required except in the case of thixotropic dispersions which can be easily converted to fluid dispersions under agitation. The alumina obtained is in the form of a dry powder, is easily handled, the pre-treatment is simple and does not require exotic equipment.

8

**0 025 817**

## Claims

1. An improved method for forming gel-resistant suspension of alumina in water by heating alpha alumina monohydrate in a sealed autoclave to temperatures of from 121°C—371°C in the presence of from 10—80% water based upon the weight of total alumina present and allowing the autoclave to achieve autogeneous pressure for a time ranging from 5 minutes to 24 hours, drying said alumina and mixing it with dilute aqueous acid solutions, characterised in that the drying of said alumina is performed by venting said autoclave at a temperature of about 107°C and recovering said dry alumina.

2. A method as described in claim 1 wherein the pressure ranges from 0.12 to 9.95 bars.

3. A method as described in claim 2 wherein the alumina is heated at temperature of from 149°C to 260°C in the presence of 10—30 weight percent water.

4. A method as described in claim 3 wherein the alumina is dispersed in an aqueous solution containing from 0.4 to 2.0% monovalent acid by weight based upon the total dispersion weight.

5. A method as described in claim 4 wherein the acid is selected from the group consisting of nitric, hydrochloric, acetic, formic.

## Patentansprüche

1. Verbessertes Verfahren zur Herstellung einer gelbeständigen Suspension von Aluminiumoxid in Wasser durch Erhitzen von α-Aluminiumoxidmonohydrat in einem geschlossenen Autoklaven auf Temperaturen von 121°C bis 371°C in Gegenwart von 10 bis 80% Wasser, bezogen auf das Gewicht der vorhandenen Gesamtmenge Aluminiumoxid, wobei man den Autoklaven für eine Zeitspanne innerhalb des Bereiches von 5 min bis 24 h auf autogenen Druck kommen läßt, Trocknen des Aluminiumoxids und Mischen desselben mit verdünnten wäßrigen Säurelösungen, dadurch gekennzeichnet, daß das Trocknen des Aluminiumoxids durchgeführt wird durch Belüften des Autoklaven bei einer Temperatur von etwa 107°C und Abtrennen des trockenen Aluminiumoxids.

2. Verfahren nach Anspruch 1, bei dem der Druck innerhalb des Bereiches von 0,12 bis 9,95 bar liegt.

3. Verfahren nach Anspruch 2, bei dem das Aluminiumoxid in Gegenwart von 10 bis 30 Gew.-% Wasser auf eine Temperatur von 149°C bis 260°C erhitzt wird.

4. Verfahren nach Anspruch 3, bei dem das Aluminiumoxid in einer wäßrigen Lösung dispergiert wird, die 0,4 bis 2,0 Gew.-% einer monovalenten Säure, bezogen auf das Gesamtgewicht der Dispersion, enthält.

5. Verfahren nach Anspruch 4, bei dem die Säure ausgewählt wird aus der Gruppe, die besteht aus Salpetersäure, Chlorwasserstoffsäure, Essigsäure und Ameisensäure.

## Revendications

1. Procédé perfectionné pour former une suspension d'alumine dans l'eau résistant à la formation de gel, en chauffant une α-alumine monohydratée dans un autoclave hermétiquement fermé à des températures de 121°C—371°C en présence de 10 à 80% d'eau par rapport au poids de l'alumine totale présente et permettant à l'autoclave d'établir une pression autogène pendant une durée comprise entre 5 minutes et 24 heures, à sécher ladite alumine et à la mélanger avec des solutions diluées aqueuses d'acides, caractérisé en ce qu'on effectue le séchage de ladite alumine en ventilant ledit autoclave à une température d'environ 107°C et on récupère ladite alumine sèche.

2. Procédé selon la revendication 1, dans lequel la pression est comprise entre 0,12 et 9,95 bars.

3. Procédé selon la revendication 2, dans lequel on chauffe l'alumine à une température de 149 à 260°C en présence de 10 à 30% en poids d'eau.

4. Procédé selon la revendication 3, dans lequel on disperse l'alumine dans une solution aqueuse contenant 0,4 à 2,0% en poids d'un acide monovalent par rapport au poids total de la dispersion.

5. Procédé selon la revendication 4, dans lequel on choisit l'acide dans le groupe comprenant les acides nitrique, chlorhydrique, acétique et formique.

9

DISPERSION BEHAVIOR OF AUTOCLAVE
TREATED ALUMINA (450°F)

Fig. 1

DISPERSION BEHAVIOR OF AUTOCLAVE
TREATED ALUMINA (550°F)

*Fig. 2*